# EUROPÄISCHE PATENTSCHRIFT

(11) **EP 2 206 687 B1**
(45) Veröffentlichungstag und Bekanntmachung des Hinweises auf die Patenterteilung: **04.07.2012**
(21) Anmeldenummer: 10000057.9
(22) Anmeldetag: 07.01.2010
(51) Int. Cl.: C02F 3/20, B01F 3/04, F16K 15/14

(54) **Vorrichtung zum Begasen/Belüften von Flüssigkeiten**
Device for aerating/ventilating liquids
Dispositif de gazage/aération de liquides

(30) Priorität: 08.01.2009 DE 102009041992
(43) Veröffentlichungstag der Anmeldung: 14.07.2010
(73) Patentinhaber: Tolckmitt, Hans-D., 45257 Essen (DE)
(72) Erfinder: Tolckmitt, Hans-D., 45257 Essen (DE)

(56) Entgegenhaltungen:
- DE-A1- 3 226 065
- DE-A1- 4 213 316
- DE-C1- 3 429 197
- US-A- 2 978 234
- 'Gewebe (Textil)', [Online] 26 Dezember 2008, Wikipedia Gefunden im Internet: <URL:http://de.wikipedia.org/w/index.php?ti tle=Gewebe_%28Textil%29&oldid=54573598> [gefunden am 2011-07-13]
- 'Kettfaden', [Online] 30 Oktober 2008, Wikipedia Gefunden im Internet: <URL:http://de.wikipedia.org/w/index.php?ti tle=Kettfaden&oldid=52405567> [gefunden am 2011-07-13]

## Beschreibung

Die Erfindung betrifft eine Vorrichtung zum Belüften von Flüssigkeiten, insbesondere von Abwasser, mit einem Anschluss für ein Gaszuführungssystem und mit einer mit Membrane, die mit Durchtrittsöffnungen versehen ist und die im Strömungsweg des Gases in der Flüssigkeit angeordnet ist, wobei die Membrane als elastisches Gewebe ausgebildet ist.

Derartige Vorrichtungen werden eingesetzt in mit Flüssigkeit gefüllten Becken/Behälter, um die Flüssigkeit mit Luft oder anderen Gasen anzureichern. Ein wichtiges Anwendungsgebiet ist die Belüftung von Abwasser mit Luft bzw. Sauerstoff im Rahmen der Abwasseraufbereitung.

### Stand der Technik:

Der momentane Stand der Technik bei der Belüftung von Abwasser mit Luft ist, dass die Belüfter mit Gummi-/Silicon-/Kunststoff Membranen oder mit Membranen aus poröser, offenporiger Keramik versehen sind.

Bei Gummi-/Silicon- oder Kunststoff- Membran- Belüftern ist der Luftwiderstand relativ hoch. Darüber hinaus ist die Anzahl der Belüftungsschlitze durch das Material begrenzt, da bei einer zu hohen Dichte an Schlitzen das Material reißt (Reißverschluss-Effekt). Die Schlitze werden relativ arbeitsaufwendig in das Gummi / Silicon /Kunststoff- Material gestanzt.

Nachteilig bei den Keramik- Belüftern sind deren hohe Kosten bei der Herstellung. Darüber hinaus ist es ohne weiteres nicht möglich die Luftzufuhr abzuschalten, da die Gefahr besteht, dass das System voll läuft und die Poren verstopfen.

Aus der US 2 978 234 A ist eine Vorrichtung der eingangs genannten Art bekannt, bei der im Strömungsweg des Gases eine Platte mit einzelnen Durchtrittsöffnungen angeordnet ist. Das Gas strömt durch die Durchtrittsöffnungen und anschließend durch ein poröses elastisches Stoffgebilde, welches sich bei Gasbeaufschlagung halbzylinderförmig über der Platte wölbt. Um zu verhindern, dass feste Verschmutzungen das Gewebe verstopfen, soll das Stoffgebilde in sich zusammenfallen, wenn kein Gas ausströmt, damit feste Verschmutzungen abfallen können. Bei wechselnder Begasung muss vor jeder Begasung das schlaffe Stoffgebildes gefüllt werden, was Zeit kostet, so dass sich der Zeitpunkt der Begasung verzögert und ein schlechtes Blasenbild entsteht.

Ferner ist eine gattungsgemäße Vorrichtung aus der DE34 29 197 C1 bekannt. Ein Grundkörper weist einen Gewebeüberzug mit einer Vielzahl von Öffnungen auf, die nicht näher beschrieben werden.

Die DE 32 26 065 A1 beschreibt ein Rohr zum Belüften von Wasser, bei dem ein Gewebe als Aufziehhilfe für ein elastisches perforiertes Mantelrohr dient.

Die DE 42 13 316 A1 zeigt eine gattungsgemäße Vorrichtung mit einem flächigen, aus einem flexiblen Gewebematerial gebildeten Element, welches mit Schlitzen oder Löchern versehen ist. Nachteilig ist, dass bei der Belüftung von Abwasser das Belüftungsergebnis verbesserungsbedürftig ist, weil die Blasen relativ groß und unregelmäßig sind.

Aufgabe der Erfindung ist es, eine Vorrichtung zum Belüften von Flüssigkeiten zu schaffen, die auf einfache Weise kostengünstig hergestellt werden kann und mit der in einer Flüssigkeit ein feinblasiges und gleichmäßiges Blasenbild erzeugt wird.

### Lösung der Aufgabe:

Diese Aufgabe wird gelöst durch die Merkmale des Anspruchs 1.

Erfindungsgemäß weist das Gewebe Kette- und Schuss-Fäden mit unterschiedlicher Elastizität auf.

### Vorteil der Erfindung:

Der Einsatz von Gewebe ist zum einen günstig und zum anderen wird durch die Ausnutzung der natürlichen Struktur des Gewebes kein weiterer mechanischer Arbeitsschritt zur Erzeugung der Durchtrittsöffnungen für das Gas notwendig. Die Struktur des Gewebes gewährleistet eine hohe Dichte an Belüftungspunkten. Dadurch wird auch der Widerstand gering gehalten. Aufgrund der feinen und sehr vielen Poren ist die Gefahr des Verstopfens der Membrane gering. Die Gas- bzw. Luftdurchlässigkeit ist der wesentliche Vorteil des Gewebes.

Vorzugsweise weisen die Kette- und Schuss-Fäden eine unterschiedliche Stärke und/oder ein unterschiedliche Reißfestigkeit auf und/oder bestehen aus unterschiedlichen Materialien.

Durch verschiedene Gewebeaufbauarten bei Kette und Schuss und Garnfeinheit können die Belüfter ideal auf besondere Anforderungen eingestellt werden.

Die Kette- und Schuss-Fäden bestehen vorzugsweise aus Kunststofffasern, aus Metallfasern, Glasfasern oder Kohlefaser.

Durch unterschiedlich starke und elastische Fäden bei Kette und Schuss erhält man unterschiedliche Blasenbilder. Des Weiteren können die Gewebe präpariert (Nano-Effekt), teflonisiert, metallisch bedampft werden.

Die Stärke des erprobten Gewebes liegt bei 0,3 mm und ist dadurch Material und Gewichts sparend.

Das Gewebe sollte aus Kunstfasern für den technischen Bereich (verrottungsfest) bestehen und schließt ebenfalls Glasgewebe, Metallgewebe oder ein Mix derselben ein. Das Gewebe kann gewebt, geflochten oder gestrickt sein.

Durch Beaufschlagung mit Gasdruck öffnet sich das Gewebe an den Kreuzungspunkten von Kette und Schuss und gibt eine Vielzahl von Durchtrittsöffnungen frei.

Das hier gewählte Kunststoff-Gewebe hat eine Fadendichte von jeweils 20 Kett- und Schuss-Fäden/cm. Das Gewebe hat ca. 360 Öffnungspunkte / cm2 und ist 0,3 mm stark bei einem Gewicht 265 g/m2. Der Kett-Faden ist ca.2 x so dick wie der Schuss-Faden und damit in der Zugfestigkeit sehr viel größer. Die unterschiedliche Elastizität von Kette (ca. 145 da N) und Schuss(ca.90 da N) ist wichtig für das Öffnen des Gewebes an den Kreuzungspunkten bei Beaufschlagung mit Gasdruck - ca. 350 mm WS.

Es sollten Kunststoffe wie Polyester, Polyacryl , PVC eingesetzt werden, die verrottungsfest sind.

Die Membrane kann streifenförmig ausgebildet sein und im Strömungsweg des Belüftungsgases in der Flüssigkeit angeordnet werden. Vorzugsweise wird die Membrane in einem Becken/Behälter befestigt.

Bei einer Bevorzugten Ausführungsform ist die Membrane auf einem Grundkörper aufgebracht, an den die Leitung für das Belüftungsgas angeschlossen ist.

Vorzugsweise ist der Grundkörper als Teller oder als Platte ausgebildet.

Zwischen Membrane und Grundkörper ist vorteilhafterweise eine rutschfeste Schicht, insbesondere aus Kunststoff, Gummi oder Silicon aufgebracht. Einer lösbaren Halterung, beispielsweise in Form einer Schwelle, fixiert die Membrane auf dem Grundkörper.

Erfindungsgemäß ist die Leitung für das Belüftungsgas mit einer Rückströmsicherung versehen.

Vorzugsweise ist die Rückströmsicherung als Gummi-/Silicon-/Kunststoff- Schlauch bzw. Mantel ausgebildet, der die Austrittsöffnung der Leitung für das Betüftungsgas vollständig bedeckt und bei Beaufschlagung mit dem Belüftungsgas diese Öffnung freigibt.

Die Erfindung wird anhand von Ausführungsbeispielen, die in den Zeichnungen dargestellt sind, näher beschrieben.

Die Zeichnungen zeigen in
Fig. 1:einen Querschnitt einer erfindungsgemäßen Vorrichtung (Belüfter) mit Rückfluss-Ventil als Schlauchstück 6;
Fig. 2 : einen Gewebe-Teller- Belüfter ;
Fig. 3 : einen Gewebe- Platten- Belüfter - a) abgerundete Enden, b) Flügelform;
Fig. 4 : einen Gewebe- Platten- Belüfter - Rechteckige Form - Neues Konzept ;
Fig. 5: Gewebe- Streifen- Belüfter - Nur mit Einblasseite- Kopf 2 - ohne anschließendes Stützrohr
   - Endseite 11- mit Möglichkeit zur Aufhängung
   - Belüfter nicht selbst tragend - Neues Konzept.
   Bild 6: Gewebe-Membrane, Kette und Schuss dargestellt

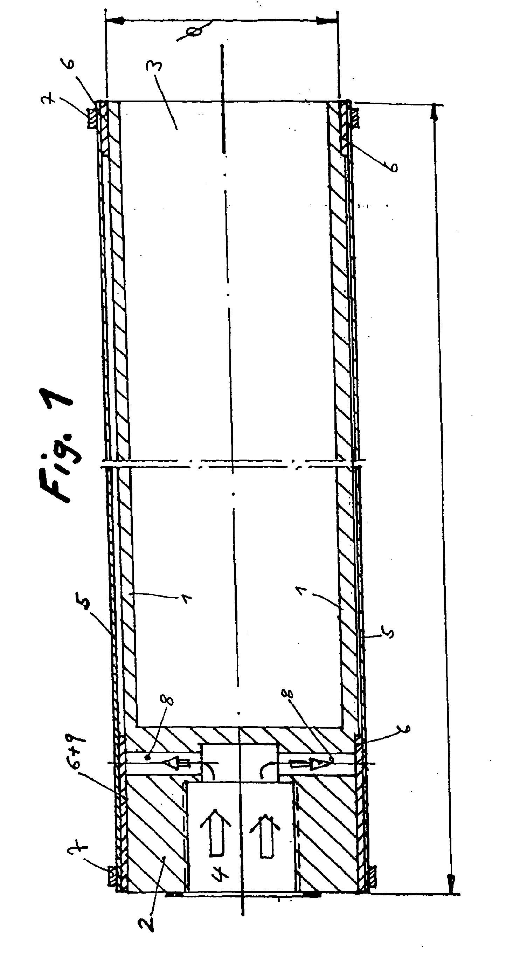

### Zu Fig. 1:

Der Belüfter für Abwasser besteht aus dem zylinderförmigen Grundkörper 1 als Stützkörper. Dem Abwasser wird Luft zugeführt. Wir unterscheiden am Grundkörper 1 die Einblasseite bzw. Kopf 2 und die Gegenseite als offene Endseite 3.

Offene Endseite deshalb, um einen möglichst geringen Auftrieb durch Flutung des Grundkörpers zu erhalten.

Es ist aber auch möglich, dass die Endseite verschlossen ist, wenn der Auftrieb des Grundkörpers kein Problem ist, z.B. wenn der Grundkörper aus Metall besteht.

Der Grundkörper 1 weist eine an sich bekannte Dichtung und einen Anschluss 4 an ein nicht dargestelltes Gas- bzw. Luftzufuhrsystem auf. Auf dem Grundkörper 1 ist eine zylinderförmige Membrane 5 in Form eines Gewebes mit einer lösbaren Halterung 7 in Form einer Schlauchschelle befestigt. Von dem Anschluss 4 gehen radial(mindestens eine) Lufteinlassöffnungen ab. Zwischen dem Grundkörper 1 und der Membrane bildet sich ein Strömungsweg für die Luft.

An den Enden des Textilgewebes befinden sich zwischen Grundkörper und Gewebe jeweils ein kurzes Gummi-/.

Silicon-/Kunststoff-Schlauchstück 6. Diese dienen zum einen dazu, dem Gewebe bei der Befestigung mittels Schelle Halt auf dem Grundkörper 1 zu geben (Rutschfestigkeit) und zum anderen als Rückfluss-Ventil 9 auf der Kopfseite, um die Lufteinlasslöcher 8 zu überdecken und sicher abzuschließen

Die Schlauchstücke 6 können auf den Grundkörper 1 entweder aufgeschoben werden oder werden entsprechend der Wandstärke der Schlauchstücke in den Körper eingelassen. Außendurchmesser Belüfterkörper und Schlauchstücke bilden dadurch einen gemeinsamen Außendurchmesser - der Zwischenraum -Membrane zum Körperwird dadurch kleiner.

Andere Rückfluss- Ventile sind hier auch möglich, wie z. B. Kugelrückschlag-Ventile. Entscheidend ist hierbei das Material der Membrane und die Art der Befestigung .Eine andere Art der Befestigung der Gewebe-Membrane 5 auf dem Grundkörper 1 ist das Verschweißen oder Verkleben.

Das Gewebe ist bei diesem Ausführungsbeispiel gewebt. Die Stärke des erprobten Gewebes liegt bei 0,3 mm und ist dadurch Material und Gewichts sparend. Das Gewebe besteht aus Kunstfasern für den technischen Bereich (verrottungsfest).

Durch Beaufschlagung mit der unter einem geringen Überdruck stehenden Luft öffnet sich das Gewebe an den Kreuzungspunkten von Kette und Schuss.

Das hier gewählte Kunststoff-Gewebe hat eine Fadendichte von jeweils 20 Kett- und Schuss-Fäden/cm. (ca. 360 Öffnungspunkte / cm2) und ist 0,3 mm stark bei einem Gewicht 265 g/m2. Der Kett-Faden ist ca.2 x so dick wie der Schuss-Faden und damit in der Zugfestigkeit sehr viel größer. Die unterschiedliche Elastizität von Kette (ca. 145 da N) und Schuss (ca.90 da N) ist wichtig für das Öffnen des Gewebes an den Kreuzungspunkten bei Beaufschlagung mit Luftdruck - ca. 350 mm WS.

Ähnlich ist ein Oval-Belüfter - ovaler Querschnitt, nicht extra dargestellt, aufgebaut.

Der obere Teil der Zeichnung zeigt die Schlauchstücke 6 aufgelegt und der untere Teil der Zeichnung zeigt die Schlauchstücke 6 eingelassen.

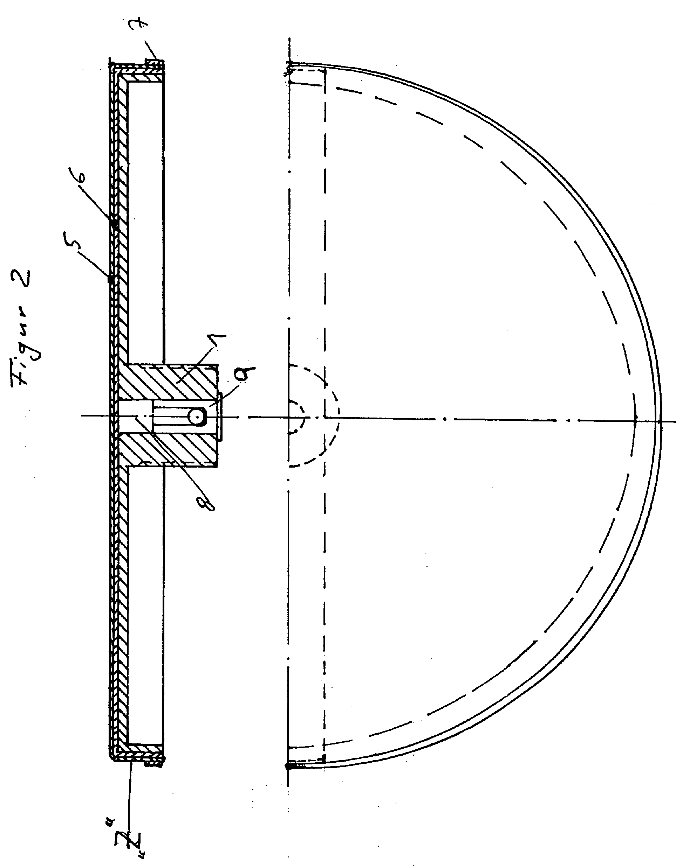

### Zu Fig. 2:

Hier geht es um einen Standard-Grundkörper auf dem eine Gewebe-Membrane 5 aufgebracht ist.

An der Außenseite des Tellers -"Z"- wird die Membrane ähnlich wie beim Rohr-Belüfter (Fig. 1) mit einer Schelle und einem Gummischlauch-Stück/-Band fixiert-Alternativ: angeschweißt oder geklebt.

Auch hier bedarf es eines Rückfluss-Ventils 9 - ausgeführt wie Fig. 1 oder Kugel-Rückfluss-Ventil - eingebaut in die Luft- Leitung.

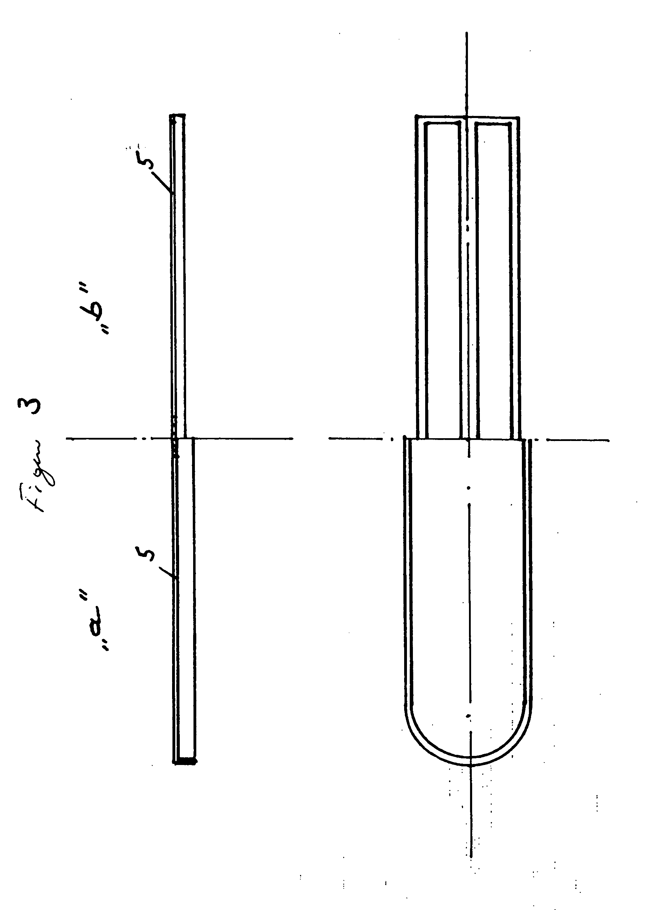

### Zu Fig. 3:

Gängige Belüfter, die entsprechend Fig. 1 und Fig. 2 mit einer erfindungsgemäßen Gewebe-Membrane 5 versehen werden.

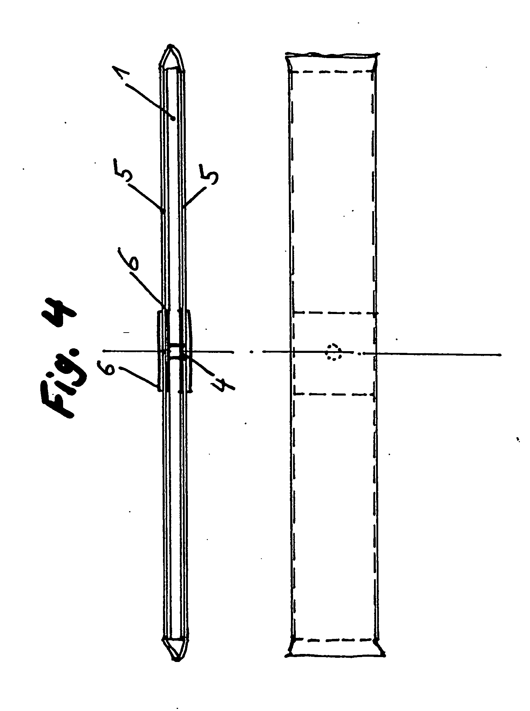

### Zu Fig. 4:

Rechteckiger Grundkörper 1 mit mittiger Begasung aufgesetzt auf 4-kant-Rohr. Körper aus Kunststoff platte, Rückfluss-Ventil als Schlauchstück 6 mittig aufgeschoben. Gewebe-Membrane 5 als Schlauch aufgezogen und die Enden verschweißt. 2. Schlauchstück mittig auf Körper aufgeschoben. Befestigung mittig mit Schraube am 4-Kant-Rohr.

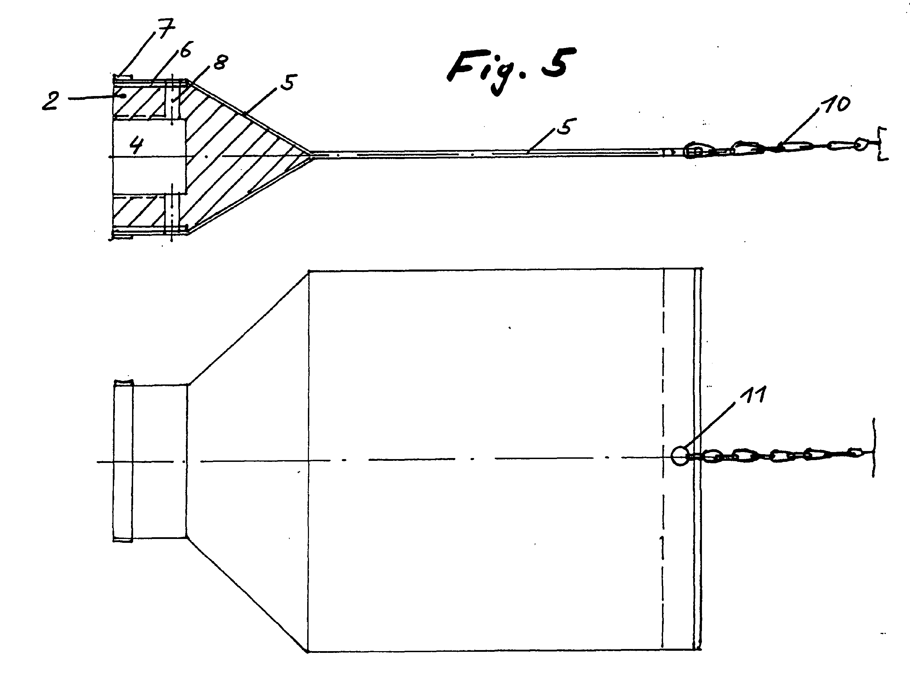

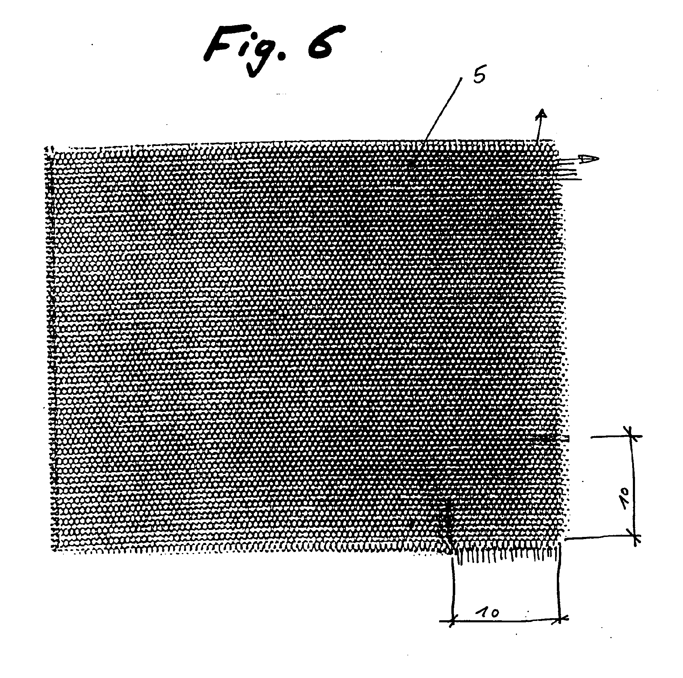

### Zu Fig. 5:

Ähnlich wie Fig. 1, jedoch ohne anschließendes Rohrstück. Endseite bildet die Gewebe-Membrane 5 selbst und wird durch Kette 10 oder Seil fixiert an gegenüber liegender Wand oder Rohr. Die Gewebe-Membrane 5 wird durch Verschweißen, Kleben oder Naht verschlossen. Eingesetzt kann die Gewebe-Membrane über die Breite eines Belebungsbecken. Die Kettfäden sind eventuell zu verstärken. Die Länge der Gewebe-Membrane als Schlauch ist beliebig.

Abschließend kann gesagt werden, dass die Gewebe-Membrane 5 auch an den Grundkörper 1 angeschweißt oder geklebt werden kann.

Im Rahmen der Erfindung sind Abwandlungen möglich. Generell ist das vorgestellte System mit sämtlichen Belüfter-Formen und Ausführungen realisierbar, zum Beispiel als Luftkissen, angebracht im Becken und verankert.

Das Gewebe weist ein in sich geschlossenes Warenbild auf Der Rapport ist abgestimmt auf die Gewebe-Membrane.

### Zu Bild 6

Es zeigt die Gewebe-Membrane im vergrößerten Zustand.

Kett- und Schuss-Fäden sind dargestellt.

### Weitere Vorteile:

Das Material ist verrottungsfest - lange Standzeit-
Das Material beinhaltet keine Weichmacher - keine Material- Veränderung-
Die Gewebe-Membrane hat eine hohe Luft-/Gasbeaufschlagung - geringere Anzahl an Belüftern erforderlich-
Das Gewebe ist sehr flexibel - leicht im Gewicht und gut zu verarbeiten-
Der Luft-/Gaswiderstand ist niedrig - geringerer Energiebedarf-

## Patentansprüche

1. Vorrichtung zum Belüften von Flüssigkeiten, insbesondere von Abwasser, mit einem Anschluss (4) für ein Gaszuführungssystem und mit einer Membrane (5), die mit Durchtrittsöffnungen versehen ist und die im Strömungsweg des Gases in der Flüssigkeit angeordnet ist, wobei die Membrane (5) als elastisches Gewebe ausgebildet ist,
**dadurch gekennzeichnet,**
**dass** das Gewebe Kette- und Schuss-Fäden mit unterschiedlicher Elastizität aufweist.

2. Vorrichtung nach Anspruch 1,
**dadurch gekennzeichnet,**
**dass** die Kette- und Schuss-Fäden eine unterschiedliche Stärke und/oder ein unterschiedliche Reißfestigkeit aufweisen und/oder aus unterschiedlichen Materialien bestehen.

3. Vorrichtung nach Anspruch 1 oder 2,
**dadurch gekennzeichnet, dass** die Kette- und Schuss-Fäden aus Kunststofffasern, aus Metallfasern, Glasfasern oder Kohlefaser bestehen.

4. Vorrichtung nach einem der Ansprüche 1 bis 3,
**dadurch gekennzeichnet,**
**dass** die Membrane (5) auf einen Grundkörper (1) aufgebracht ist, an den die Leitung für das Belüftungsgas angeschlossen ist.

5. Vorrichtung nach Anspruch 4,
**dadurch gekennzeichnet,**
**dass** der Grundkörper (1) als Zylinder, Teller oder als Platte ausgebildet ist.

6. Vorrichtung nach Anspruch 4 oder 5,
**dadurch gekennzeichnet, dass**
zwischen Membrane (5) und Grundkörper (1) eine rutschfeste Schicht, insbesondere aus Kunststoff, Gummi oder Silicon aufgebracht ist und dass eine lösbaren Halterung (7) die Membrane (5) auf dem Grundkörper (1) fixiert.

7. Vorrichtung nach einem der Ansprüche 1 bis 6,
**dadurch gekennzeichnet, dass** von dem Anschluss (4) radial mindestens eine Luftöffnung abgeht.

8. Vorrichtung nach Anspruch 7,
**dadurch gekennzeichnet, dass** der Anschluss (4) und/oder die Luftöffnung mit einem Rückfluss-Ventil (9) versehen ist.

9. Vorrichtung nach Anspruch 8,
**dadurch gekennzeichnet, dass** das Rückfluss-Ventil (9) als Gummi-/Silicon-/KunststoffSchlauch bzw. Mantel ausgebildet ist, der den Anschluss (4) oder die Luftöffnung vollständig bedeckt und bei Beaufschlagung mit dem Belüftungsgas den Anschluss (4) und/oder die Luftöffnung freigibt.

## Claims

1. Device for aerating liquids, in particular waste water, having a connection (4) for a gas supply system and having a diaphragm (5) which is provided with through-passage openings and is arranged in the flow path of the gas in the liquid, wherein the diaphragm (5) is in the form of an elastic fabric, **characterized in that** the fabric has warp and weft threads having different elasticities.

2. Device according to Claim 1, **characterized in that** the warp and weft threads have different thicknesses and/or different tearing strengths and/or consist of different materials.

3. Device according to Claim 1 or 2, **characterized in that** the warp and weft threads consist of plastics fibres, of metal fibres, glass fibres or carbon fibre.

4. Device according to one of Claims 1 to 3, **characterized in that** the diaphragm (5) is positioned on a basic body (1) to which the line for the aeration gas is connected.

5. Device according to Claim 4, **characterized in that** the basic body (1) is in the form of a cylinder, disc or plate.

6. Device according to Claim 4 or 5, **characterized in that** a non-slip layer, made in particular of plastics material, rubber or silicone, is positioned between the diaphragm (5) and the basic body (1), and **in that** a releasable holder (7) fixes the diaphragm (5) on the basic body (1).

7. Device according to one of Claims 1 to 6, **characterized in that** at least one air opening extends radially from the connection (4).

8. Device according to Claim 7, **characterized in that** the connection (4) and/or the air opening is provided with a check valve (9).

9. Device according to Claim 8, **characterized in that** the check valve (9) is in the form of a rubber/silicone/plastics material hose or sheath which completely covers the connection (4) or the air opening and opens the connection (4) and/or the air opening when acted upon by the aeration gas.

## Revendications

1. Dispositif d'aération de liquides, en particulier d'eaux usées, présentant un raccord (4) prévu pour un système d'amenée de gaz et une membrane (5) dotée d'ouvertures de passage et disposée dans le parcours d'écoulement du gaz dans le liquide, la membrane (5) étant configurée comme tissu élastique,
**caractérisé en ce que**
le tissu présente des fils de chaîne et des fils de trame d'élasticités différentes.

2. Dispositif selon la revendication 1, **caractérisé en ce que** les fils de chaîne et les fils de trame présentent des épaisseurs différentes et/ou des résistances différentes à la déchirure, et/ou sont constitués de matériaux différents.

3. Dispositif selon les revendications 1 ou 2, **caractérisé en ce que** les fils de chaîne et les fils de trame sont constitués de fibres de matière synthétique, de fibres métalliques, de fibres de verre ou de fibres de carbone.

4. Dispositif selon l'une des revendications 1 à 3, **caractérisé en ce que** la membrane (5) est appliquée sur un corps de base (1) auquel le conduit amenant le gaz d'aération est raccordé.

5. Dispositif selon la revendication 4, **caractérisé en ce que** le corps de base (1) est configuré en forme de cylindre, de plateau ou de plaque.

6. Dispositif selon les revendications 4 ou 5, **caractérisé en ce qu'**une couche anti-glissement, en particulier en matière synthétique, en caoutchouc ou en silicone, est appliquée entre la membrane (5) et le corps de base (1) et **en ce qu'**un dispositif de maintien libérable (7) fixe la membrane (5) sur le corps de base (1).

7. Dispositif selon l'une des revendications 1 à 6, **caractérisé en ce qu'**au moins une ouverture d'air part radialement du raccord (4).

8. Dispositif selon la revendication 7, **caractérisé en ce que** le raccord (4) et/ou l'ouverture d'air sont dotés d'une soupape anti-retour (9).

9. Dispositif selon la revendication 8, **caractérisé en ce que** la soupape anti-retour (9) est configurée comme tuyau flexible ou enveloppe en caoutchouc, silicone ou matière synthétique qui recouvre complètement le raccord (4) ou l'ouverture d'air et qui libère le raccord (4) et/ou l'ouverture d'air lorsque du gaz d'aération est amené.
